# DEMANDE DE BREVET EUROPEEN

(11) **EP 0 995 527 A1**
(43) Date de publication de la demande: **26.04.2000**
(21) Numéro de dépôt: 99402609.4
(22) Date de dépôt: 21.10.1999
(51) Int. Cl.: B23B 31/30

(54) **Procédé de commande du serrage et du desserrage d'un mandrin à commande hydraulique**

(30) Priorité: 23.10.1998 FR 9813319
(71) Demandeur: GAMET PRECISION, F-27110 Le Neubourg (FR)
(72) Inventeur: Roussel, Jacques, 27110 Le Neubourg (FR)
(74) Mandataire: Caron, Gérard

(57) **Abrégé**

Ce procédé consiste à appliquer dans au moins l'une des chambres du vérin de commande (20) du mandrin (8), une pression de serrage régulée en fonction d'une consigne de pression de serrage et à effectuer par l'intermédiaire de clapets de sécurité (22a, 22b) un maintien de la pression de serrage dans la chambre correspondante, lorsque la valeur de la pression régulée en amont dudit vérin, subit une brusque réduction due à une défaillance de fonctionnement.

Selon l'invention la régulation de la pression de serrage est du type à boucle fermée. La pression de serrage dans la chambre correspondante du vérin est modifiée de façon à inhiber le maintien de la pression pendant une durée prédéterminée (T0, T2), lorsqu'il se présente une demande d'opérateur tendant à modifier la force de serrage appliquée sur la pièce à usiner. La durée de cette inhibition est au moins égale au temps nécessaire pour stabiliser la régulation.

## Description

La présente invention est relative à un procédé de commande du serrage et du desserrage d'un mandrin à commande hydraulique destiné à être utilisé sur des machines-outils dans lesquels pour pouvoir être usinées, les pièces doivent être entraînées en rotation.

Des mandrins de serrage de ce type sont connus et un type particulier d'un tel mandrin est décrit par la Demanderesse dans le brevet EP 0 546 926.

Ils sont en général actionnés par un vérin à double effet adapté sur la broche tournante de la machine-outil et servant à actionner les mors dans le sens du serrage ou du desserrage, le vérin étant couplé à un dispositif de commande hydraulique piloté par une boucle de réglage. Un tel dispositif permet de modifier la force de serrage de la pièce au cours de l'usinage, par exemple pour passer d'un usinage d'ébauche à un usinage de finition.

En effet, les spécialistes savent que l'usinage d'ébauche que l'on souhaite en général faire le plus rapidement possible exige une force de serrage importante du mandrin alors que cette force de serrage ne peut être maintenue pendant l'usinage de finition ne serait-ce que pour éviter la déformation de la pièce, par exemple quand elle est creuse et que le serrage est extérieur à la pièce.

Les mandrins connus jusqu'ici comportent une boucle de réglage ouverte pour ajuster la pression en fonction d'une consigne de pression donnée par l'opérateur. Cependant, une telle boucle ouverte ne permet pas de suivre l'évolution de la pression de façon automatique et d'avoir une information fiable sur la bonne exécution d'un ordre de changement de pression. Ceci ne va pas dans le sens d'une sécurité de fonctionnement en toute circonstance.

On sait par ailleurs qu'en général, dans le domaine de la régulation, on peut assurer la bonne exécution des ordres de changement d'une grandeur de commande en utilisant la boucle de régulation fermée comprenant une voie de contre-réaction qui est rebouclée sur l'entrée de la boucle, à laquelle sont appliquée en outre le signal de consigne et un signal de mesure de la grandeur réelle établie.

Cependant, en associant une boucle de régulation fermée à un mandrin du type indiqué ci-dessus, on se heurte à un problème spécifique lié à la présence dans le vérin de clapets de sécurité. Pour des raisons évidentes de sécurité, le vérin est en effet pourvu de clapets insérés respectivement dans les conduites d'alimentation immédiatement en amont des deux chambres du vérin pour y maintenir la pression si, en raison d'un incident de fonctionnement quelconque, la pression d'alimentation vient à se réduire dans une mesure importante et rapide, voire à être supprimée. Sans cette précaution, la pièce à usiner risquerait en cas d'incident d'échapper au mandrin.

Or, en cas d'une commande d'inversion de sens du vérin de serrage à double effet pour opérer respectivement le serrage ou le desserrage, la pression présente dans les chambres de celui varie brusquement d'une valeur relativement élevée à une valeur zéro ou inversement. Dans de telles conditions, un système de régulation à boucle fermée ne peut établir la nouvelle pression que moyennant une période transitoire pendant laquelle la pression peut prendre des valeurs difficilement maîtrisables avant que la boucle ne se stabilise sur la valeur correspondant à la valeur de la nouvelle pression dans la chambre correspondante du vérin. Une telle variation brusque pendant la période transitoire risque d'atteindre une valeur de pression importante maintenue par les clapets de sécurité. Ceux-ci maintiennent donc la pression établie auparavant en isolant le vérin du système hydraulique de régulation, entraînant ainsi le serrage du mandrin, alors qu'en réalité, aucune condition n'est présente nécessitant l'intervention des clapets.

L'invention a pour but de fournir un procédé de commande d'un mandrin de serrage à commande hydraulique pour machine-outil tournante ne présentant pas les inconvénients mentionnés ci-dessus, tout en permettant d'adjoindre à la commande une boucle de réglage fermée.

L'invention a donc pour objet un procédé de commande d'un mandrin à commande hydraulique pour machine-outil rotative tel que défini dans la revendication 1.

Il résulte de ces caractéristiques que le procédé permet de discriminer entre une situation dans laquelle la modification de la pression de serrage résulte d'une action dans le cadre du fonctionnement normal du mandrin et une situation anormale (par exemple une défaillance de la source de pression hydraulique) dans laquelle la sécurité doit être assurée. Grâce au procédé selon l'invention, les clapets de sécurité ne peuvent ainsi agir que lorsque la pression de serrage est due à une défaillance du système.

D'autres caractéristiques avantageuses du procédé selon l'invention sont définies dans les sous-revendications.

D'autres caractéristiques et avantages de l'invention apparaîtront au cours de la description qui va suivre donnée uniquement à titre d'exemple et faite en se référant aux dessins annexés sur lesquels:
- la figure 1 est un schéma synoptique d'un système de commande d'un mandrin hydraulique de serrage, conçu pour mettre en oeuvre le procédé de commande selon l'invention;
- la figure 2 représente un schéma simplifié de la partie hydraulique du système de commande représenté à la figure 1;
- les figures 3A, 3B et 3C représentent ensemble un organigramme pouvant être mis en oeuvre dans le module de régulation faisant partie du système de commande de la figure 1 et illustrant le procédé selon l'invention; et
- la figure 4 est un graphe de la pression en fonction du temps illustrant certaines phases importantes de mise en oeuvre du procédé selon l'invention.

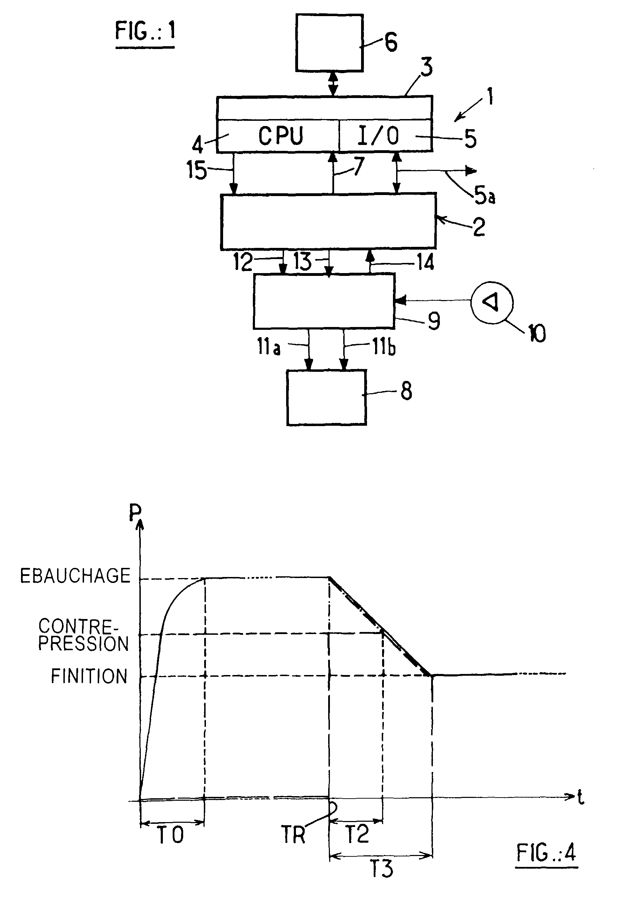

La figure 1 représente, à titre d'exemple, un système de commande d'un mandrin à commande hydraulique pour la mise en oeuvre du procédé selon l'invention.

Ce système de commande 1 comprend un module de régulation 2 connu en soi comprenant une boucle de régulation capable de fournir sur sa sortie une grandeur régulée en fonction d'un signal de consigne appliquée à son entrée moyennant une contre-réaction. Les spécialistes qualifient une telle boucle de "fermée", comme il est bien connu. Pour fixer les idées, le module de régulation peut être du type DR 19 fabriqué par la Société Siemens et du type CPM1A fabriqué par la Société OMRON.

Dans le cas représenté, dans lequel le mandrin commandé par le système de la figure 1 est incorporé dans une machine-outil à commande numérique, le module 2 est interconnecté avec la commande numérique 3 comprenant une unité centrale CPU 4 et des interfaces d'entrée/sortie 5 permettant d'échanger des informations avec le module de régulation 2. Ces interfaces assurent également, par l'intermédiaire d'une ligne 5a, la communication avec les organes de fonctionnement de la machine-outil (non représentés) autres que le mandrin de serrage hydraulique, et avec un pupitre de commande 6 de l'opérateur. Ces éléments du système de commande ne formant pas partie de l'invention, ils ne sont pas décrits en détail.

On notera également que le module de régulation 2 envoie par une ligne 7 un signal de mesure représentatif de la pression appliquée au mandrin de serrage à l'unité centrale 4, ce signal permettant d'afficher la valeur correspondante sur un écran (non représenté) du pupitre 6.

Le mandrin de serrage est désigné par le bloc 8. Il est connecté, par l'intermédiaire de deux canalisations 11a et 11b, à un bloc hydraulique 9 alimenté par une source de pression hydraulique 10. Le bloc hydraulique 9 est relié au module de régulation 2 par une première ligne de commande 12 par laquelle transite le signal de sortie de la boucle de régulation du module 2. Une ligne 13 applique au bloc des signaux de commande d'électrodistributeurs tandis qu'une ligne 14 transmet au module 2 un signal de mesure de pression fonction de la pression actuelle présente dans l'une ou l'autre des chambres du vérin du mandrin 8. Le module de régulation 2 reçoit également par l'intermédiaire d'une ligne 15, un signal analogique de pression.

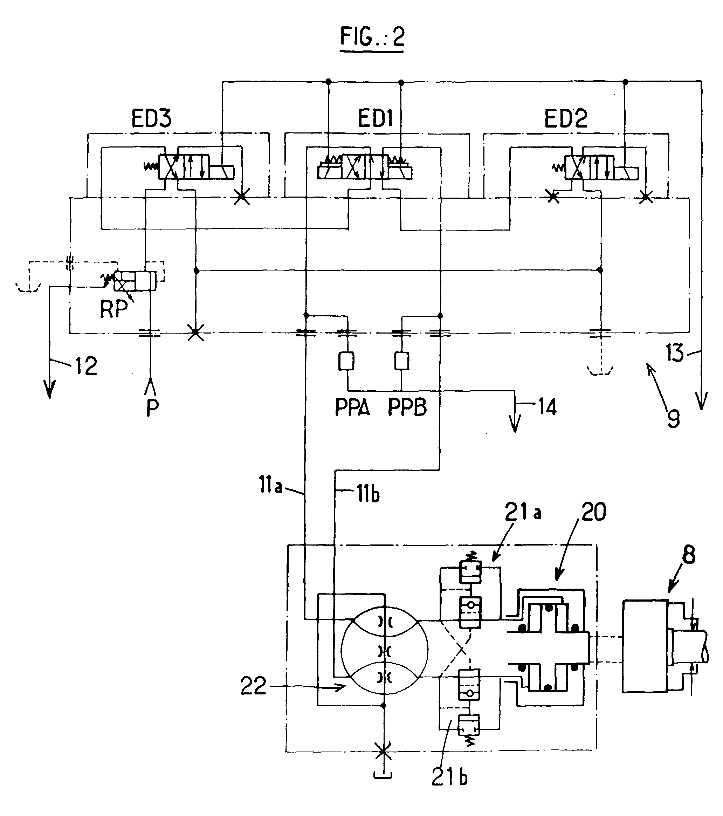

Un exemple de schéma hydraulique du mandrin 8 et du bloc hydraulique 9 est représenté plus en détail sur la figure 2.

Le mandrin 8 est actionné par un vérin à double effet 20 dont le piston est relié à la commande du mandrin 8. L'ensemble est fixé à la broche tournante (non représentée) de la machine-outil. Les chambres du vérin 20 sont connectées respectivement aux conduites 11a et 11b par l'intermédiaire de clapets de sécurité respectifs 21a et 21b et d'un joint tournant 22. Sur les conduites 11a et 11b sont branchées respectivement des capteurs de pression PPA et PPB qui y relèvent les pressions de serrage et transfèrent les signaux électriques correspondants au module 2 par la ligne 14 (figure 1).

Il est à noter que le mandrin est conçu pour permettre les serrages dits "externe" et "interne" de pièces respectivement sur leur surface extérieure ou sur leur surface intérieure, si la pièce comprend un alésage interne. C'est pourquoi, on peut selon le cas et au choix de l'opérateur, appliquer les pressions de serrage et de desserrage dans la ligne 11a ou la ligne 11b et partant dans les chambres du vérin, selon la position d'un électrodistributeur ED1 de commande de serrage incorporé dans le bloc hydraulique 9.

Ce dernier comprend également un réducteur de pression proportionnelle RP, appelé ci-après "valve de régulation RP". Celle-ci est connectée par une connexion P à l'alimentation hydraulique 10 et à un autre électrodistributeur ED3 de commande d'alimentation. La valve RP est connectée électriquement à la ligne 12 (figure 1) et reçoit ainsi un signal électrique qui correspond à la sortie du module de régulation 2.

Un troisième électrodistributeur ED2 est connecté à l'électrodistributeur ED1 de manière à pouvoir appliquer aux mors du mandrin une réaction facilitant le relâchement de l'effort de serrage de la pièce à usiner.

Des signaux électriques de commande provenant du module 2 sont appliqués aux électrodistributeurs ED1, ED2 et ED3 par l'intermédiaire de la ligne 13 (figure 1).

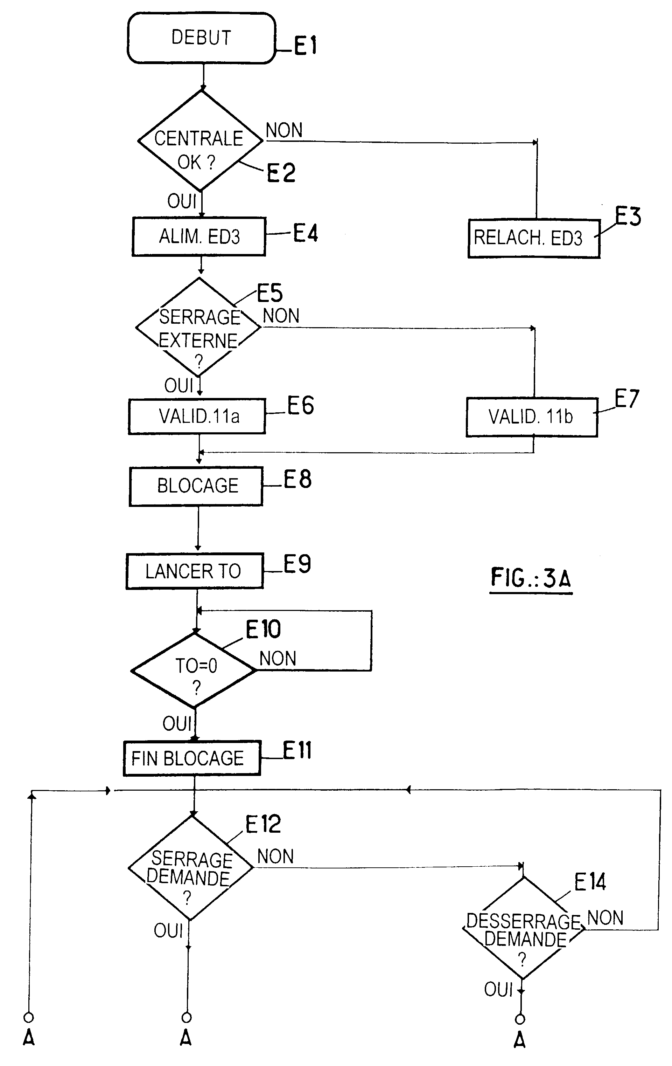

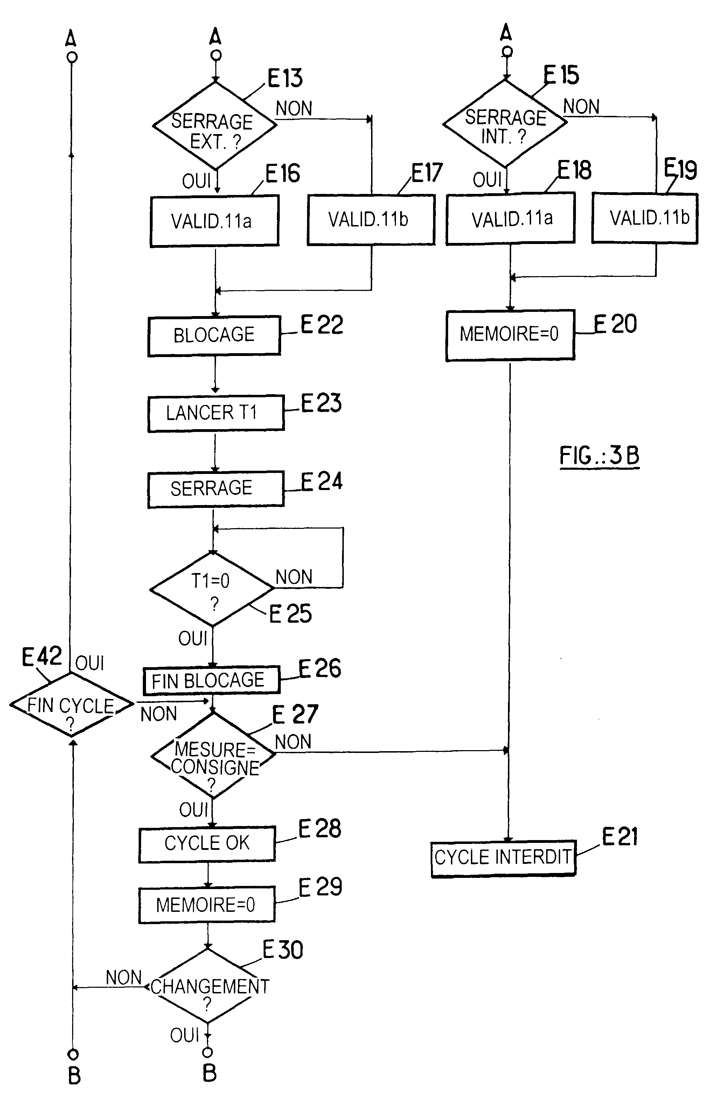

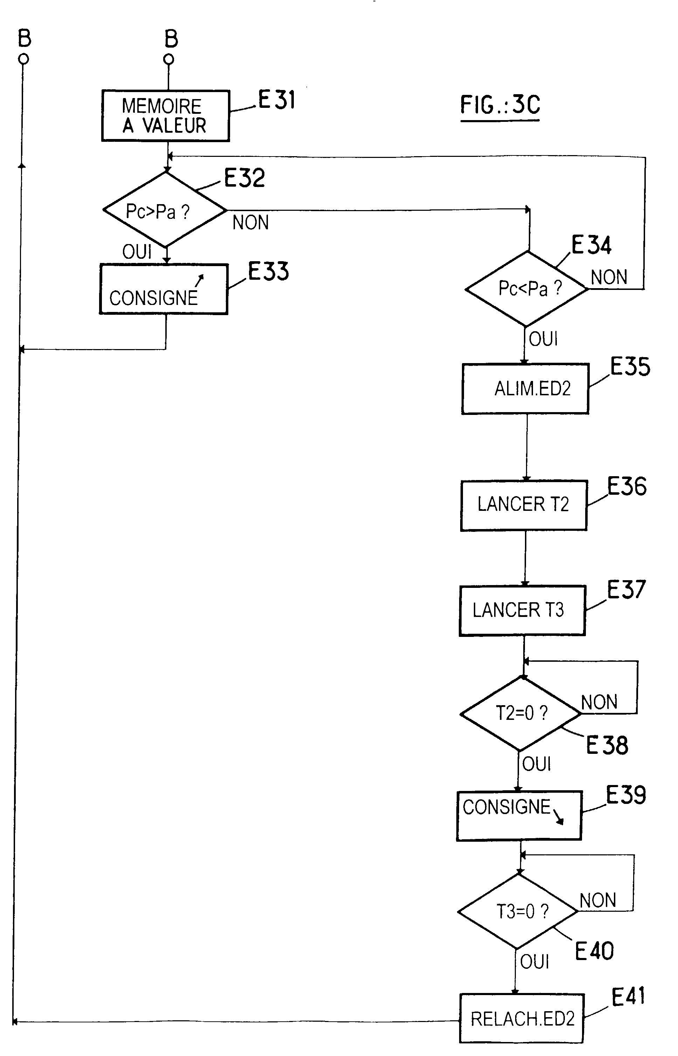

On va maintenant se référer aux figures 3A, 3B et 3C qui représentent un organigramme du programme exécuté par l'unité centrale 4 pour mettre en oeuvre le procédé selon l'invention.

Après la mise en marche (étape E1) du programme, un test est d'abord effectué à l'étape E2 pour vérifier le bon fonctionnement de la centrale hydraulique (alimentation 10). Si le test s'avère négatif, l'excitation de l'électrodistributeur ED3 est inhibée par l'étape E3 empêchant ainsi le fonctionnement du mandrin. Si le test s'avère affirmatif, l'électrodistributeur ED3 est excité par la ligne 13 (étape E4) et la pression d'alimentation est appliquée à l'électrodistributeur ED1.

L'étape E5 consiste à tester un emplacement de la mémoire de l'unité 3 dans lequel est stocké un bit représentant le mode de serrage externe ou interne dans lequel se trouvait le mandrin 8 avant la mise en marche de l'étape E1. Si ce bit est à '1', cela signifie que le serrage était externe et le test étant alors affirmatif, une mesure de pression dans la conduite 11a (serrage externe) par le capteur PPA est validée à l'étape E6. La valeur de mesure relevée constitue la valeur de pression réelle appliquée au module de régulation 2. Dans le cas contraire, le serrage était interne et une étape E7 consiste alors à valider la mesure effectuée par le capteur PPB relative à la pression dans la conduite 11b (serrage interne).

L'étape E8 consiste à relever dans la mémoire de l'unité 3 une valeur antérieure de pression de serrage, c'est-à-dire celle qui était présente, lorsque le système a été arrêté la fois précédente. Cette valeur présente à la sortie de la boucle de régulation du module 2 est maintenue pendant une durée prédéterminée, la boucle de régulation étant provisoirement inhibée.

La durée d'inhibition de la fonction de régulation de la boucle est déterminée par une temporisation TO (voir aussi la figure 4) qui est lancée pendant l'étape E9. Cette temporisation peut avoir une durée de 1,5 à 3 secondes par exemple et permet d'éviter que des variations de pression éventuelles dans l'une ou l'autre des chambres du vérin 20 viennent déclencher les clapets de sécurité 22a ou 22b selon le cas.

Le test de l'étape E10 consiste à vérifier, si la temporisation a pris fin. Si c'est le cas, la boucle de régulation est libérée à l'étape E11 et la pression dans la chambre correspondante du vérin 2 est ajustée, le cas échéant. Le système est alors initialisé et se place en attente d'une demande d'opérateur spécifiant si le mandrin 8 doit être serré ou desserré.

Si à l'étape E12, un test montre qu'une demande de serrage est formulée par l'opérateur (au moyen d'un bouton de commande situé sur le panneau de commande 6), le programme passe à un autre test de l'étape E13 qui vérifie une nouvelle fois si la demande de serrage est externe. Sinon, le programme effectue un test par l'étape E14 pour vérifier si l'opérateur a formulé une demande de desserrage. S'il n'y a pas de demande de desserrage non plus, le programme retourne au test E12 et le cycle de vérification des demandes de serrage/desserrage est renouvelé jusqu'à ce qu'une demande de l'opérateur survienne. Dans le cas d'une réponse affirmative au test E14, il s'agit d'une demande de desserrage et le programme passe au test E15.

Si le test E13 indique qu'il s'agit d'un serrage externe ou interne, des mesures de pression dans les conduites 11a et 11b sont validées respectivement aux étapes E16 ou E17. Des validations analogues sont effectuées, selon le cas après le test E15 pendant les étapes respectives E18 et E19.

Lorsque l'opérateur a demandé un desserrage de mandrin constaté par l'étape E14, la pression de desserrage est appliquée dans la chambre correspondante du vérin au cours de l'étape E20. Cette opération est suivie d'une interdiction du cycle de travail de la machine-outil, grâce à l'exécution de l'étape E21, car le mandrin est maintenant en position ouverte.

Si au contraire l'opérateur a demandé un serrage, ce qui s'était révélé pendant le test E12, le programme prévoit, selon l'invention, lors d'une étape E22, d'inhiber la fonction de régulation du module 2 pendant une durée qui correspond à celle de la période transitoire de stabilisation de la boucle de régulation. En effet, le déclenchement de l'opération de serrage nécessite une commutation de la pression entre les deux chambres du vérin à double effet, ce qui pourrait ici également déclencher les clapets de sécurité 22a et 22b pendant la période de stabilisation de la boucle de régulation.

Par conséquent, la valeur actuelle de la pression est maintenue à la sortie du module de régulation 2 ce qui permet au vérin 20 de rapprocher les mors du mandrin (étape E24). L'étape 22 déclenche également, à l'étape E23, une deuxième temporisation T1 d'une durée de 1,5 à 3 secondes par exemple, suffisante pour couvrir la période transitoire de la régulation. Pendant cette courte période, les clapets de sécurité ne détectent ainsi aucun défaut de pression et leur action de maintien de la pression est inhibée.

Le test E25 permet de vérifier si la temporisation T1 s'est écoulée. Si le test est affirmatif, l'inhibition de la régulation est supprimée par l'étape E26.

Le programme entre alors dans une phase au cours de laquelle l'usinage de la pièce peut être exécutée. Cette phase commence par un test E27 de contrôle de la pression de serrage pendant lequel la pression de consigne appliquée par la ligne 16 au module 2 est comparée à la pression réelle régnant dans la chambre correspondante du vérin. Si la réponse à ce test est négative, c'est que l'installation présente un défaut et le programme passe à l'étape E21 d'interdiction du cycle de travail de la machine-outil.

Si, au contraire le test E27 s'avère affirmatif, le cycle d'usinage est autorisé à l'étape E28 et l'opérateur peut procéder à l'ébauchage de la pièce à usiner. L'emplacement de la mémoire de l'unité centrale 4, dans lequel était stockée la valeur de changement de pression précédente est remise à zéro à l'étape E29.

Le programme est alors en attente d'une demande de changement de pression de serrage de la part de l'opérateur, cette demande étant surveillée par le test de l'étape E30. Tant que le test E30 trouve une réponse négative, le programme reboucle sur l'opération E27, le système vérifiant ainsi constamment, avec une certaine tolérance qui peut atteindre 3% par exemple, la concordance entre la pression de consigne et la pression réelle appliquée au vérin 20 et déterminée par le capteur PPA qui mesure la pression dans la conduite 11a.

Si à l'étape E30, il s'avère qu'une demande de changement de pression a été formulée par l'opérateur, la nouvelle valeur demandée est stockée en mémoire à l'emplacement précité de mémorisation de la valeur de pression (étape E31).

Par un test effectué à l'étape E32, le programme vérifie d'abord si la pression demandée est supérieure à la pression actuelle. Si c'est le cas, lors de l'étape E33, la valeur de consigne de la boucle de régulation est augmentée d'autant et la valeur de pression de serrage est ajustée. Ensuite, le programme reboucle sur l'opération de contrôle de pression correspondant à l'étape E27.

Si la réponse au test E32 est négative, le programme vérifie, lors de l'étape E34 si la nouvelle pression demandée est inférieure à la pression actuelle. Si la réponse est négative, le programme reboucle sur l'étape E32.

Dans le cas contraire, le procédé de l'invention exécute une suite d'opérations selon une autre caractéristique importante de l'invention. Il est à noter que dans le présent contexte, une demande de diminution de la pression de serrage peut être fréquente, car elle est formulée chaque fois que l'opérateur passe de l'ébauchage de la pièce à usiner à sa finition. Pendant cette dernière opération, il est en effet fréquemment nécessaire de réduire la force de serrage en vue d'éviter une déformation de la pièce désormais fragilisée par l'opération d'ébauchage. Grâce au procédé selon l'invention, le passage de l'une à l'autre phase d'usinage de la pièce peut se faire alors que le mandrin continue à tourner.

Par conséquent selon l'invention, la diminution de la pression de serrage est accompagnée de l'application d'une contre-pression, côté du piston du vérin 20 opposé à celui sur lequel est appliquée la pression de serrage, obtenue par l'obturation du retour hydraulique du joint tournant 22 qui, par conception, engendre une montée en pression de la chambre opposée à l'alimentation de pression. Cette action a pour effet de faciliter la réduction de la force de serrage.

Pour obtenir cette contre-pression, le programme commande, au cours de l'étape E35, l'excitation de l'électrodistributeur ED2 tout en lançant en même temps deux temporisations T2 et T3 constituant les étapes E36 et E37 du programme. A titre d'exemple, la temporisation T2 peut être choisie entre 1 et 1,5 seconde, tandis que la temporisation T3 peut être de 3 à 5 secondes.

L'évolution de la pression de serrage peut être observée sur le graphe de la figure 4, dans lequel l'instant TR indique le moment où commence la transition de la pression de serrage de sa valeur de serrage d'ébauchage à sa valeur de finition. Dès la commutation de l'électrodistributeur ED2, la chambre du vérin opposée à celle dans laquelle règne la pression de serrage est obturée. En même temps, la pression de serrage est relâchée sous la commande de la boucle de réglage et selon un taux de réduction prédéterminé. Ce taux est choisi de telle manière que le clapet de sécurité 22a ou 22b ne puisse se fermer et là également son action éventuelle est inhibée temporairement.

L'écoulement de la temporisation T2 est surveillé au cours d'une étape E38 après quoi, au cours de l'étape E39, la consigne de pression appliquée à la boucle de régulation est réduite à la valeur choisie par l'opérateur. La pression de serrage continue de diminuer jusqu'à la valeur requise pour la fonction de la pièce et, la temporisation T3 étant surveillée par l'étape E40, l'électrodistributeur ED2 est relâché pendant l'étape E41 à l'expiration de la temporisation T3. L'opérateur peut alors exécuter la finition et le programme reboucle sur une étape de programme E42.

Cette étape consiste à surveiller une commande de fin de cycle d'usinage exécutée par l'opérateur. Tant que le test reçoit une réponse négative, le programme reboucle sur l'étape E27 de contrôle de la pression de consigne. En revanche, dès que le test de l'étape E42 décèle une commande de fin de cycle d'usinage, le programme reboucle sur le test de l'étape E12 pour qu'un nouveau cycle d'usinage puisse être exécuté.

## Revendications

1. Procédé de commande d'un mandrin (8) à commande hydraulique pour machine-outil rotative, ce mandrin étant destiné à serrer des pièces à usiner et actionné par un vérin de serrage/desserrage à double effet (20), ce procédé consistant à appliquer dans au moins l'une des chambres dudit vérin (20), une pression de serrage régulée en fonction d'une consigne de pression de serrage et à effectuer un maintien de la pression de serrage dans la chambre correspondante, lorsque la valeur de la pression régulée en amont dudit vérin, subit une brusque réduction due à une défaillance de fonctionnement, caractérisé en ce qu'il consiste à effectuer la régulation de la pression de serrage à boucle fermée et à modifier la pression de serrage dans ladite chambre de façon à inhiber ledit maintien de ladite pression pendant une durée prédéterminée (T0, T2), lorsqu'il se présente une demande d'opérateur tendant à modifier la force de serrage appliquée sur ladite pièce à usiner, la durée d'inhibition étant au moins égale au temps nécessaire pour stabiliser ladite régulation.

2. Procédé de commande suivant la revendication 1, caractérisé en ce que ladite durée d'inhibition (T0, T2) est choisie entre 1,5 et 3 secondes.

3. Procédé de commande d'un mandrin suivant l'une quelconque des revendications 1 et 2, ce mandrin (8) étant agencé pour permettre sélectivement le serrage interne ou externe desdites pièces, caractérisé en ce que, au cas où la demande d'opérateur tendant à modifier la force de serrage est une demande de serrage/desserrage total d'une pièce à usiner, il consiste opérer ladite inhibition en maintenant ladite pression de serrage à une valeur qui était présente antérieurement à ladite demande d'opérateur.

4. Procédé suivant l'une quelconque des revendications 1 à 3, caractérisé en ce que, au cas où la demande d'opérateur tendant à modifier la force de serrage est une demande de réduction partielle de cette force de serrage, il consiste à opérer ladite inhibition en réduisant la pression de serrage selon une loi prédéterminée.

5. Procédé de commande suivant la revendication 4, caractérisé en ce qu'il consiste en outre, à la suite de ladite demande de réduction partielle, à appliquer une contre-pression dans la chambre du vérin (20) opposée à celle contenant la pression de serrage, pendant une durée au moins égale à ladite durée d'inhibition.

6. Procédé de commande suivant la revendication 5, caractérisé en ce que ladite contre-pression est maintenue pendant une durée choisie entre 3 et 5 secondes.

7. Procédé de commande suivant l'une quelconque des revendications 1 à 6, caractérisé en ce qu'il consiste à surveiller la concordance entre la pression de serrage établie dans la chambre correspondante dudit vérin (20) et ladite consigne de pression de serrage et à interdire le fonctionnement de ladite machine-outil lorsque ladite pression de serrage diffère de ladite consigne de pression de serrage.
